# EUROPEAN PATENT APPLICATION

(11) **EP 4 492 509 A2**
(43) Date of publication of application: **15.01.2025**
(21) Application number: 24185342.3
(22) Date of filing: 28.06.2024
(51) Int. Cl.: H01M 8/04014, H01M 8/0612, H01M 8/0662

(54) **FUEL PROCESSING UNIT FOR A FUEL CELL SYSTEM AND METHOD OF OPERATING THEREOF AT AN ELEVATED TEMPERATURE**

(30) Priority: 12.07.2023 US 202363526295 P
(71) Applicant: Bloom Energy Corporation, San Jose, CA 95134 (US)
(72) Inventor: MALVIYA, Shraddesh, San Jose, CA 95134 (US); KHAN, Mohammad, San Jose, CA 95134 (US); RANGANATHAN, Srikanth, San Jose, CA 95134 (US); JUDAY, Samuel, San Jose, CA 95134 (US); GOEL, Sarika, San Jose, CA 95134 (US)
(74) Representative: Wichmann, Hendrik

(57) **Abstract**

A fuel processing unit includes a fuel line configured to transfer a fuel, a fuel processor including a processing material container configured to contain a processing material configured to remove at least one impurity from the fuel at an elevated temperature above 50°C to produce a processed fuel, and a thermal treatment device configured to thermally treat the fuel by thermally treating at least one of the fuel line or the processing material container to the elevated temperature.

## Description

### TECHNICAL FIELD

The present disclosure generally relates to a fuel processing unit, and more particularly to a desulfurizer unit for a fuel cell system and method of operating thereof at an elevated temperature.

### BACKGROUND

In a fuel cell system, impurities, such as sulfur compounds, are typically removed from hydrocarbon fuel (e.g., natural gas, methane, biogas, syngas, etc.) to prevent damage to the fuel cell electrodes. The fuel cell system may include a fuel processor that removes the impurities from the fuel. The fuel processor may include a desulfurization unit (e.g., sulfur removal unit) for removing sulfur and sulfur compounds from the fuel. The desulfurization unit may include adsorption beds which adsorb sulfur and/or sulfur compounds. However, the adsorption bed material lifetime is relatively short, which results in relatively frequent replacement of the adsorption bed material, thereby increasing the costs to run and maintain the system.

### SUMMARY

According to an aspect of the present disclosure, a fuel processing unit includes a fuel line configured to transfer a fuel, a fuel processor including a processing material container configured to contain a processing material configured to remove at least one impurity from the fuel at an elevated temperature above 50°C to produce a processed fuel, and a thermal treatment device configured to thermally treat the fuel by treating at least one of the fuel line to at least the elevated temperature or the processing material container to at least the elevated temperature.

According to another aspect of the present disclosure, a method of operating a fuel cell system includes processing a fuel to remove at least one impurity from the fuel at an elevated temperature above 50°C to provide a processed fuel, and providing the processed fuel to a fuel cell stack.

### BRIEF DESCRIPTION OF THE DRAWINGS

FIGS. 1A, 2A, 3A and 4 are schematics of fuel cell systems according to first, second, third and fourth embodiments of the present disclosure.
FIGS. 1B, 2B, and 3B are schematics of fuel processing units according to the first, the second and the third embodiments of the present disclosure.
FIG. 5 is a schematic of a fuel processing unit according to a fifth embodiment of the present disclosure.

### DETAILED DESCRIPTION

The various embodiments will be described in detail with reference to the accompanying drawings. The drawings are not necessarily to scale. Wherever possible, the same reference numbers will be used throughout the drawings to refer to the same or like parts. References made to particular examples and implementations are for illustrative purposes and are not intended to limit the scope of the claims.

The present disclosure includes a system and method in which a fuel processing unit (e.g., desulfurizer) for a fuel cell system is operated at an elevated temperature above room temperature, such as a temperature of above 50°C, for example 55°C to 250°C, including 60°C to 120°C. Operation at the elevated temperature may increase the lifespan and impurity removal efficiency of the processing material in the fuel processing unit. The processing material may comprise an impurity adsorbent and/or impurity conversion catalyst, such as a desulfurizer material, for example a sulfur adsorption bed material (i.e., sulfur adsorbent material) and/or a hydrodesulfurization catalyst.

In one embodiment, the processing material is a sulfur or sulfur compound adsorbent material, such as a metal oxide or activated carbon material. The metal oxide material may comprise copper oxide, manganese oxide, zinc oxide and/or aluminum oxide (i.e., alumina), such as GS-06 (also known as HyProGen^{®} 121) from Clariant Corp., ActiSorb^{®} S6 from Clariant Corp., or PuriStar^{®} R3-17 or R3-22 materials from BASF. The activated carbon material may comprise R8C sorbent material from SulfaTrap LLC. Some processing materials (e.g., GS-06) may have a limited capacity for adsorption of CS₂ (e.g., 0.1 %) at ambient temperature, but show a higher adsorption capacity (e.g., 1.8%) at 60°C and much higher adsorption capacity (e.g., 3.6%) at 125°C. Thus, in addition to extending the processing material lifetime, the sulfur and sulfur compound removal efficiency is improved by operating the fuel processing unit (e.g., desulfurizer) at an elevated temperature.

In another embodiment, the processing material is a hydrolysis (e.g., hydrodesulfurization) catalyst, which may comprise a promoted alumina catalyst, such as ActiSorb^{®} 405 from Clariant Corp. The hydrolysis of sulfur containing impurities (e.g., COS, CS₂, etc.) may occur at the elevated temperature in a range from 60°C to 120°C, and the sulfur containing impurities may be converted to H₂S which can be captured using an adsorbent material described above.

In some embodiments, the fuel and/or at least one processing material (e.g., desulfurizer material) container in the fuel cell system may be heated to the elevated temperature using a thermal treatment device, such as a heater and/or a heat exchanger, located in a heat transfer relationship with a fuel inlet line (e.g., fuel inlet conduit) and/or the processing material container housing the processing material. Thus, some embodiments may include a thermal treatment device for heating the fuel in the fuel line and/or heating the processing material (e.g., desulfurizer material).

In another embodiment, a fuel pressurization device, such as a fuel blower, may be used as the thermal treatment device to increase the fuel temperature by increasing the fuel pressure. For example, natural gas fuel at room temperature (e.g., 25 °C) and low pressure (e.g., 0.25 psi) may be heated to a higher temperature (e.g., 120 to 140 °C) by increasing the fuel pressure above 1 psi, such as from about 8 to 10 psi. Thus, an embodiment may include a fuel pressurization device, such as a fuel blower, upstream of the fuel processor to increase the fuel temperature to above 50 °C by increasing a pressure of the fuel provided into the fuel processor. In this embodiment, the heater and/or the heat exchanger may be present or may be omitted.

In one embodiment, the fuel processing unit is operated at a lower elevated temperature (e.g., 55°C to 70°C) at the beginning of life of the processing material and then operated at a higher elevated temperature (e.g., 110°C to 125°C) after a period of time (e.g., at least 6 months, such as after 1 to 2 years) has elapsed. Thus, the thermal treatment device may be controlled to increase the temperature of the fuel either gradually or stepwise from beginning of life to middle or end of life of the processing material.

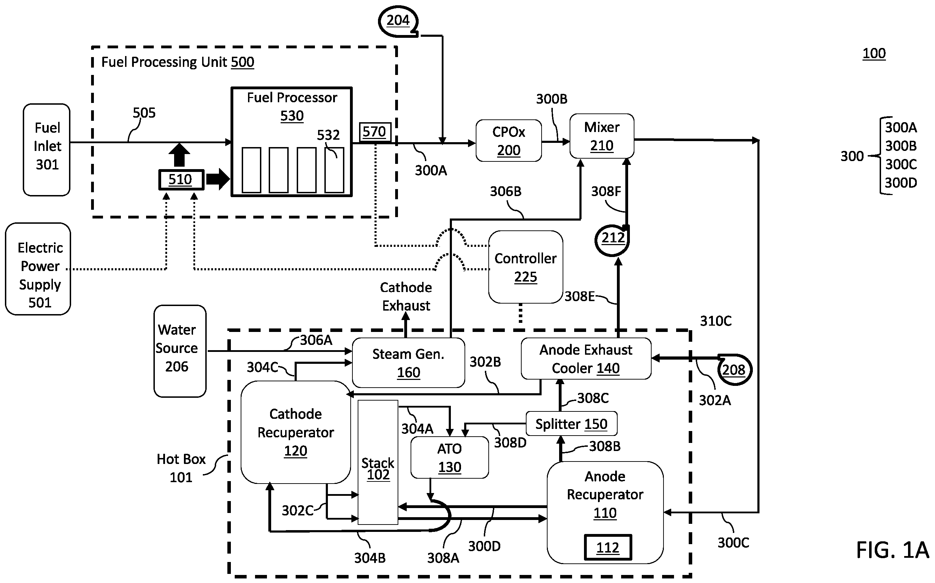

FIG. 1A is a schematic representation of a fuel cell system 100 in a first configuration according to a first embodiment. As illustrated in FIG. 1A, the fuel cell system 100 may include a hot box 101 and one or more fuel cell stacks 102 in the hot box 101.

The fuel cell stacks 102 include fuel cells separated by interconnects. The fuel cells may comprise any suitable fuel cells, such as solid oxide fuel cells and the fuel cell stacks 102 may comprise solid oxide fuel cell (SOFC) stacks. The SOFC electrolyte may include, for example, a ceramic electrolyte, such as yttria stabilized zirconia (YSZ) or scandia stabilized zirconia (SSZ). The SOFC anode may include, for example, a nickel-YSZ or Ni-SSZ cermet. The SOFC cathode may include, for example, lanthanum strontium manganite (LSM). In one embodiment, the fuel cell stacks 102 may be stacked on each other in one or more fuel cell columns.

The hot box 101 may also include an anode recuperator 110, a cathode recuperator 120, an anode tail gas oxidizer (ATO) 130, an anode exhaust cooler (AEC) 140, a splitter 150, and a steam generator 160. Alternatively, the steam generator 160 may be replaced by a water injector which injects liquid water and/or water vapor directly into an anode exhaust stream flowing from the fuel cell stacks 102 to a mixer 210. An exemplary water injector is described in U.S. Patent No. 11,196,068, issued on December 7, 2021, which is incorporated herein by reference in its entirety. The fuel cell system 100 may also include a catalytic partial oxidation (CPOx) reactor 200, a CPOx blower 204 (e.g., air blower), a system blower 208 (e.g., air blower), and an anode recycle blower 212, which may be disposed outside of the hot box 101. Optionally, water from a water source 206 (e.g., water tank, water pipe, municipal water supply, etc.) may also be provided into the CPOx reactor 200 for use with higher hydrocarbon fuels, such as propane. It should be noted that FIG. 1A is merely illustrative and the present disclosure is not limited to any particular location (e.g., inside the hot box 101, outside the hot box 101, etc.) for each of the components of the fuel cell system 100.

The fuel cell system 100 may also include a fuel processing unit 500 and a fuel line 505 which fluidly connects a fuel inlet 301 to the fuel processing unit 500. The fuel inlet 301 may include, for example, a utility gas line and/or a gas tank, such as a higher hydrocarbon gas tank (e.g., a propane tank), including one or more valves and sensors (e.g., flow meters) for controlling a flow rate of the fuel. In at least one or more embodiments, the fuel in the fuel line 505 may include one or more of the following fuels: natural gas provided from a pipeline, compressed natural gas, methane, biomethane, propane, liquid petroleum gas, gasoline, diesel, home heating oil, kerosene, JP-5, JP-8, aviation fuel, syn-gas, bio-gas, bio-diesel and other suitable hydrocarbon or hydrogen containing fuels.

The fuel processing unit 500 may be configured to process the fuels in the fuel line 505, and to produce a processed fuel from which at least one impurity is removed. The processed fuel may be substantially free of impurities, such as sulfur and/or its compounds. Thus, the processed fuel may comprise a desulfurized fuel, such as a desulfurized hydrocarbon fuel. The fuel line 505 may comprise a fuel pipe or manifold.

The fuel cell system 100 may also include at least one fuel conduit 300 directly or indirectly connecting an outlet of the fuel processing unit 500 to a fuel inlet of the fuel cell stacks 102, and configured to provide the processed fuel from the fuel processing unit 500 to the fuel cell stacks 102. In one embodiment, the at least one fuel conduit 300 may include multiple fuel conduits 300A, 300B, 300C, 300D that fluidly connect various elements of the fuel cell system 100 to the fuel processing unit 500.

In one embodiment, the fuel cell system 100 may include a plurality fuel cell modules including a plurality of the hot boxes 101, respectively. In that case, the fuel processing unit 500 may include a central fuel processing unit 500 that is fluidly connected to the plurality of hot boxes 101 located in the plurality of fuel cell modules. The central fuel processing unit 500 produces the processed fuel to be used in the plurality of hot boxes 101 of the plurality of fuel cell modules. The fuel processing unit 500 and the fuel cell modules may be located in different cabinets from each other.

The CPOx reactor 200 may receive the processed fuel produced by the fuel processing unit 500, through fuel conduit 300A. The CPOx blower 204 may provide air to the CPOx reactor 200. The fuel and/or air may be provided to the mixer 210 by fuel conduit 300B. Fuel may flow from the mixer 210 to the anode recuperator 110 through fuel conduit 300C, and may flow from the anode recuperator 110 to the fuel cell stack 102 through fuel conduit 300D.

The fuel may then be reacted in the fuel cell stack 102, and the resultant anode exhaust may include unreacted fuel components. The anode exhaust may be provided to the anode recuperator 110 to heat the incoming fuel from fuel conduit 300C. The anode exhaust may then be provided to the anode exhaust cooler 140, where the anode exhaust may be used to heat air entering the fuel cell system 100, such as air provided by the system blower 208. The anode exhaust may include unreacted fuel, carbon dioxide and/or water (e.g., steam). The anode exhaust may also be referred to herein as fuel exhaust.

The system blower 208 may be configured to provide an air stream (e.g., air inlet stream) to the anode exhaust cooler 140 through air conduit 302A. Air may flow from the anode exhaust cooler 140 to the cathode recuperator 120 through air conduit 302B. The air may flow from the cathode recuperator 120 to the fuel cell stack 102 through air conduit 302C.

Anode exhaust generated in the fuel cell stack 102 may be provided to the anode recuperator 110 through recycling conduit 308A to heat the fuel stream provided to the anode recuperator 110 via conduit 300C. The anode exhaust may be provided from the anode recuperator 110 to the splitter 150 by recycling conduit 308B. A first portion of the anode exhaust may be provided from the splitter 150 to the anode exhaust cooler 140 by recycling conduit 308C. A second portion of the anode exhaust may be provided from the splitter 150 to the ATO 130 by recycling conduit 308D. Anode exhaust may be provided from the anode exhaust cooler 140 to mixer 210 by recycling conduit 308B. The anode recycle blower 212 may be configured to pump anode exhaust to the mixer 210 through recycling conduit 308F.

Cathode exhaust generated in the fuel cell stack 102 may flow to the ATO 130 through cathode exhaust conduit 304A. Cathode exhaust and/or ATO exhaust generated in the ATO 130 may flow from the ATO 130 to the cathode recuperator 120 through exhaust conduit 304B. Exhaust may flow from the cathode recuperator 120 to the steam generator 160 through exhaust conduit 304C. Cathode exhaust may flow from the steam generator 160 and out of the hot box 101 through an exhaust outlet. Alternatively, the steam generator 160 may be omitted and the cathode exhaust may flow from the cathode recuperator 120 out of the hot box 101.

Water may flow from the water source 206 to the steam generator 160 through water conduit 306A. The steam generator 160 may convert the water into steam using heat from the ATO exhaust provided by exhaust conduit 304C. Steam may be provided from the steam generator 160 to the mixer 210 through water conduit 306B. The mixer 210 may be configured to mix the steam with anode exhaust and fuel. In at least one embodiment, the steam may be provided directly into the fuel inlet stream and/or the anode exhaust stream. In at least one embodiment, liquid water and/or water vapor may be provided into the anode exhaust stream from a water injector if the steam generator 160 is omitted (which would also eliminate water conduit 306B).

In one embodiment, the fuel cell system 100 may optionally include a pre-reformer 112. The pre-reformer 112 may include one or more catalysts (e.g., reforming catalysts) configured to operate at temperatures of above about 400°C. For example, the catalysts may be disposed between walls of the anode recuperator 110, or may be disposed in an opening formed within the anode recuperator 110. In other embodiments, one or more of the catalysts may be in the form of pucks or disks. In other embodiments, one or more of the pre-reformers 112 may be disposed downstream of the anode recuperator 110, with respect to a fuel-flow direction. The catalysts may include, for example, a metallic/ceramic foam with a catalytic layer (e.g., palladium, nickel and/or rhodium), a metallic/ceramic foam without a catalytic layer where the base metal of the foam is catalytically active (e.g., nickel), a large number of coiled wires with a catalytic layer, a packed bed of catalyst pellets, or any combination thereof. In one embodiment, the catalyst may include one or more nickel/rhodium catalysts configured to reform higher hydrocarbons (C2-C5) at very broad O:C ratios. For example, the catalyst may be configured to reform a fuel stream having at least 10 vol% of C2 and C3 hydrocarbons, without significant coke formation. For example, the catalyst may be configured to reform a fuel stream having up to 20 vol%, up to 18 vol%, up to 16 vol %, up to 14 vol%, or up to 12 vol% of C2 and C3 hydrocarbons.

In one embodiment, the pre-reformer 112 may include a hydrogenation catalyst. The hydrogenation catalyst may be configured to combine unsaturated hydrocarbons, such as ethylene and/or propylene (alkenes), with available hydrogen in the fuel stream, resulting in saturated hydrocarbons, such as ethane and propane or other alkanes. The hydrogenation catalyst may be disposed upstream of the reforming catalyst or integrated throughout the reforming catalyst. The hydrogenation catalyst may include a ceramic base, such as alumina, ceria, zirconia, or a mixture of ceria and zirconia, with a small percentage of a catalyst metal such as palladium. For example, the hydrogenation catalyst may include an amount of palladium ranging from about 0.1 wt% to about 5 wt%, such as from about 0.2 wt% to about 4 wt%, from about 0.3 wt% to about 3 wt%, or from about 0.5 wt% to about 2 wt%. The hydrogenation catalyst may also include some inhibitors and/or stabilizers such as vanadium, tungsten, and/or other similar transition metal materials.

Fuel may be provided from the anode recuperator 110 to the fuel cell stack 102 by fuel conduit 300D, where the fuel is reacted to generate electricity. The resultant anode exhaust (e.g., reaction product) may include unreacted fuel components.

The fuel cell system 100 may further include a controller 225 configured to control various elements of the fuel cell system 100. The controller 225 may include a central processing unit, microcontroller, etc. The fuel cell system 100 may include a memory device (not shown) configured to store instructions and other data (e.g., history data, reference data, performance data, etc.). The memory device may be included in the controller 225, elsewhere in the fuel cell system 100 or remotely (e.g., outside the fuel cell system 100). The controller 225 may be configured to execute the instructions stored in the memory device. The controller 225 may be configured to provide data directly or indirectly to a remote monitoring control center.

In at least one embodiment, the controller 225 may configured to control air flow through the fuel cell system 100, and/or the operation of the CPOx reactor 200. The controller 225 may be configured to control amounts (e.g., flow rates) of steam, fuel and anode exhaust provided to the mixer 210. In various embodiments, the controller 225 may also be configured to control relative amounts of anode exhaust provided from the fuel cell stack 102 to the ATO 130 and the anode recuperator 110.

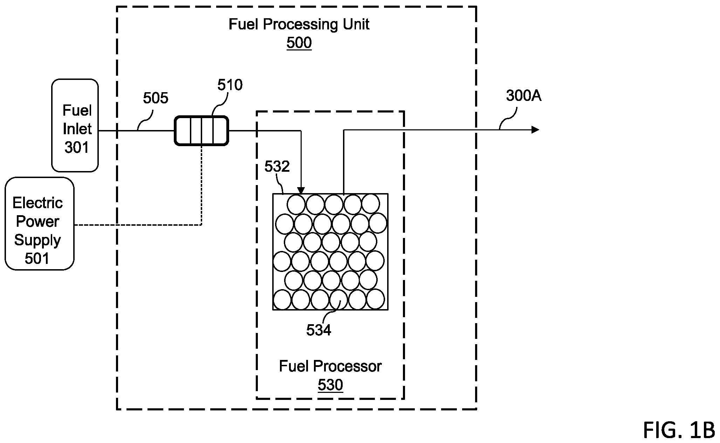

FIG. 1B is a detailed schematic view of the fuel processing unit 500 of FIG. 1A having the first configuration, according to the first embodiment. It should be noted that the fuel processing unit 500 may include a fuel processing unit housing, such as a fuel processing cabinet (not shown) that houses the fuel processor 530. In that case, the thermal treatment device 510 may be located within the housing (internally) or outside of the housing (externally).

As illustrated in FIG. 1B, the fuel processor 530 contains a processing material 534 (e.g., impurity conversion catalyst and/or impurity adsorbent material, etc.) for processing the fuel (e.g., removing impurities, such as sulfur or its compounds, from the fuel inlet stream) in the fuel line 505. The processing material 534 in the fuel processor 530 may be located in one or more processing material containers 532, such as desulfurization canisters. The processing material 534 may be in a form of an adsorption bed, a catalyst coated support, a catalyst coating on the interior wall of the container 532 and/or a catalyst bed. In one embodiment, the processing material 534 may be contained in a plurality of the processing material containers 532 fluidly connected in parallel or in series to the fuel line 505 and the fuel conduit 300A, as will be described in more detail below.

As illustrated in FIGS. 1A and 1B, the fuel processing unit 500 may also include a thermal treatment device 510 for thermally treating (e.g., heating) at least one of the fuel in the fuel line 505 or the processing material 534 in the fuel processor 530 to an elevated temperature. In particular, the thermal treatment device 510 may thermally treat the fuel, the processing material 534 or both the fuel and the processing material 534.

The fuel from the fuel inlet 301 may enter the fuel processing unit 500 through the fuel line 505 at ambient temperature (e.g., about 20°C to 45°C). The thermal treatment device 510 may heat the fuel from about ambient temperature to an elevated temperature that increases at least one of a lifetime and/or efficiency of the processing material (e.g., desulfurization material) 534. The elevated temperature may greater than 50°C, for example from 55°C to 250°C, including from 60°C to 120°C. The desulfurization material 534 may, therefore, efficiently process the thermally treated fuel and produce a processed fuel that is substantially free of sulfur or its compounds. The processed fuel may then be transferred out of the processing material container (e.g., desulfurization canister) 532 to the fuel cell stack 102 through the fuel conduit 300A.

By operating the fuel processor 530 at the elevated temperature instead of at ambient temperature, the lifespan of the desulfurization material 534 may increase, such as double or triple. In addition, operating at the elevated temperature may increase a service life of the desulfurization canister 532 and thus reduce the cost of servicing the fuel processing unit 500. Further, the cost of the desulfurization material 534 may also be reduced, since it lasts longer, the cost of recycling the desulfurization material may also be reduced as the recycling frequency is decreased, and the cost of labor may also be reduced.

In the first embodiment of FIGS. 1A and 1B, the thermal treatment device 510 may include an electrically powered thermal treatment device 510 powered by an electric power supply 501. The electric power supply 501 may include a power supply which provides electric power generated outside the fuel cell system 100 (e.g., power supplied by the electric grid, battery, or other renewable energy source) and/or power generated by the fuel cell system 100.

The thermal treatment device 510 may include, for example, an electric heater that generates heat by joule heating. The electric heater may include, for example, an insulated coil, jacket or plate resistor configured to heat the fuel line 505. The electric heater may contact the fuel line 505 or be placed in close proximity to the fuel line 505.

Alternatively, the thermal treatment device 510 may comprise a gas heater, such as a natural gas, propane or a kerosine heater. The gas heater generates heat by oxidation of a fuel gas, such as natural gas, propane or kerosine.

The fuel processing unit 500 may optionally also include a fuel analyzer 570 (FIG. 1) for analyzing the fuel in the fuel conduit 300A exiting the fuel processor 530. The fuel analyzer 570 may include, for example, a gas composition analyzer, such as an optical or chemical gas composition sensor. A performance of the fuel processor 530 (e.g., an effectiveness of the fuel processor 530 in removing impurities, such as sulfur and/or its compounds) may be determined, for example, based on an analysis of the fuel composition performed by the analyzer 570.

One or more operations in the fuel processing unit 500 may be controlled by a dedicated controller of the fuel processing unit 500 and/or the controller 225 of the fuel cell system 100. The controller 225 may be configured to control one or more operations of fuel cell system 100, including one or more operations of the fuel processing unit 500. In particular, the controller 225 may control the amount of electric power provided by the power supply 501 to the electric heater 510 to control the temperature of the fuel in the fuel line 505 and/or the temperature of the fuel processor 530. Additionally, the controller 225 may control a flow rate of the fuel in the fuel line 505 from the fuel inlet 301 to the fuel processor 530. The controller 225 may also control a flow rate of the fuel within the fuel processor 530. The controller 225 may also operate the selection valve in the fuel processor 530 to provide automated selection of one or more of the processing material containers 532 in the fuel processor 530.

The controller 225 may also control an operation of the fuel analyzer 570 in the fuel conduit 300A. The controller 225 may receive a data signal from the fuel analyzer 570 and control an operation of the fuel processing unit 500 based on the data signal from the fuel analyzer 570. The fuel processing unit 500 may include one or more temperature sensors (not shown) located in or near the fuel processing unit 500, such as in or on the fuel line 505, in the fuel processor 530 and/or in the fuel conduit 300A. The controller 225 may receive a data signal from the temperature sensor(s) and control an operation of the fuel processing unit 500 based on the data signal from the temperature sensors, such as by controlling the temperature of the thermal treatment device 510 and thereby controlling a temperature of the fuel to be processed in the fuel processor 530 and/or a temperature of the processing material 534 in the fuel processor 530. In particular, the controller 225 may control an amount of heat produced by the thermal treatment device 510 by controlling a current or voltage of electric power from the power supply 501 that powers the thermal treatment device 510. Thus, the controller 225 may control an operation of the thermal treatment device 510 based on the data signal from the fuel analyzer 570. The controller 225 may also generate service indication signals based upon data signals provided from the fuel analyzer 570. For instance, based upon data signals received from the fuel analyzer 570, the controller may generate service indication signals which are provided to a remote monitoring control station for the fuel cell system 100 and used to schedule maintenance operations when the fuel analyzer data signals indicate gas impurities have increased above a threshold value.

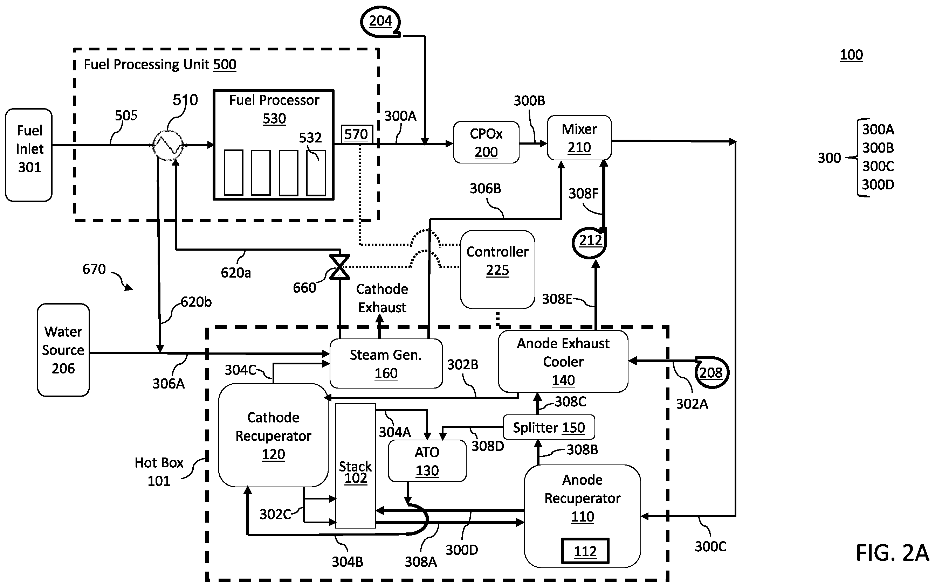

FIG. 2A is a schematic representation of the fuel cell system 100 having a second configuration, according to a second embodiment. The second configuration of the fuel cell system 100 may be substantially the same as the first configuration in FIG. 1A, except with respect to the thermal treatment device 510 and the manner of operating the thermal treatment device 510.

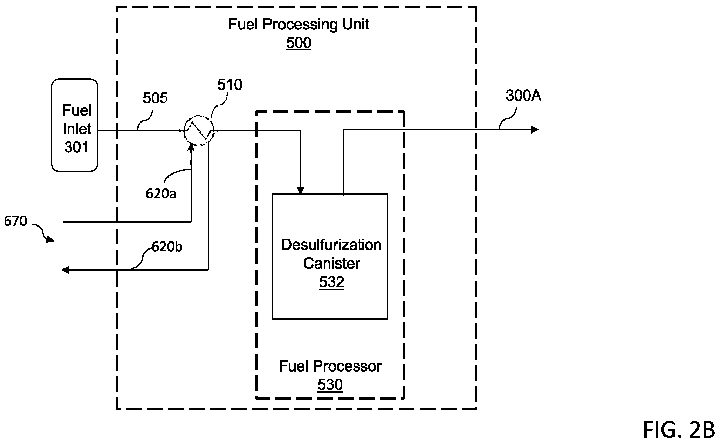

In the second configuration, the thermal treatment device 510 may include a heat exchanger configured to heat the fuel in the fuel line 505, as shown in FIGS. 2A and 2B. In particular, an elevated temperature heat exchange fluid is provided from other components of the fuel cell system to the heat exchanger (i.e., the thermal treatment device 510) to heat the fuel flowing through the fuel line 505.

The heat exchanger thermal treatment device 510 may comprise any type of heat exchanger, such as a plate heat exchanger, a tube within a tube heat exchanger, a shell and tube heat exchanger, etc. In the second embodiment, the heat exchange fluid may include hot water and/or steam provided from the steam generator 160 in the fuel cell system 100. As illustrated in FIG. 2A, the hot water and/or steam may be transferred from the steam generator 160 to the heat exchanger thermal treatment device 510 by transfer conduit 620a (e.g., a pipe). Thus, the transfer conduit connects an outlet of the steam generator 160 to the heat exchanger thermal treatment device 510. A control valve 660 may be included in the transfer conduit 620a for controlling a flow rate of the hot water and/or steam in the transfer conduit 620a. The control valve 660 may be controlled, for example, by a control signal from the controller 225.

The hot water and/or steam in the transfer conduit 620a may enter the heat exchanger thermal treatment device 510 and heat the fuel in the fuel line 505 passing through the heat exchanger thermal treatment device 510. The hot water and/or steam may then exit the heat exchanger thermal treatment device 510 through a return conduit 620b. The return conduit 620b may provide the hot water and/or steam back to the water conduit 306A for transporting water to the steam generator 160. Alternatively, the return conduit 620b may provide the hot water and/or steam directly to the steam generator 160. The transfer conduit 620a and return conduit 620b may therefore constitute a water loop 670 connected to the heat exchanger thermal treatment device 510.

By controlling the control valve 660, the controller 225 may control the temperature in the heat exchanger thermal treatment device 510 and thereby a temperature of the fuel in the fuel line 505. In particular, the controller 225 may increase a temperature of the fuel by opening the control valve 660. The controller 225 may decrease a temperature of the fuel by closing the control valve 660. Further, the controller 225 may control the control valve 660 based on a signal from the fuel analyzer 570.

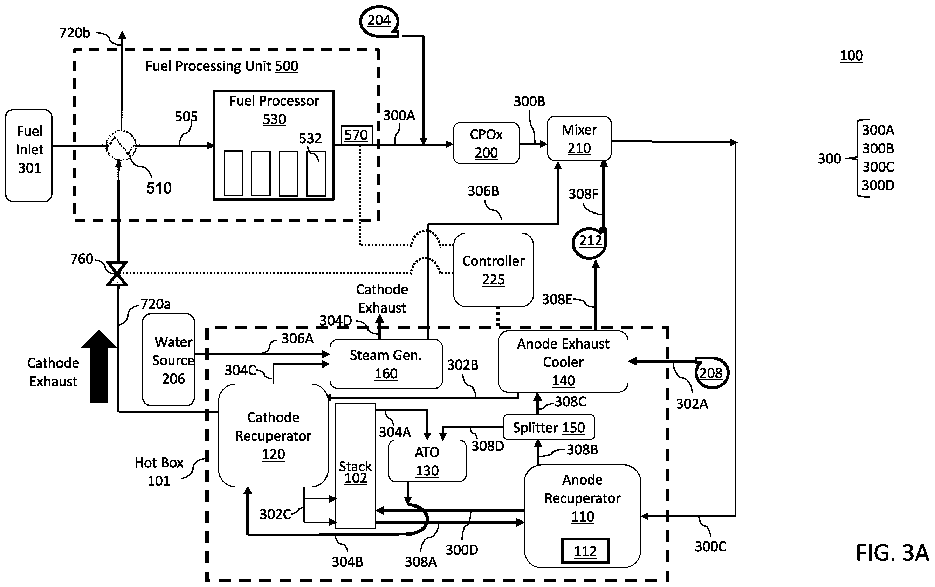

FIG. 3A is a schematic representation of the fuel cell system 100 having a third configuration, according to a third embodiment. The third configuration of the fuel cell system 100 may be substantially the same as the second configuration in FIG. 2A, except that a fuel cell system 100 exhaust is used as the heat exchange fluid.

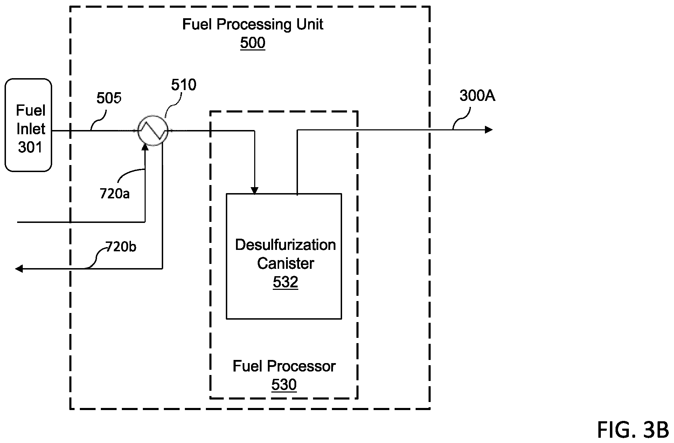

In the third configuration of FIGS. 3A and 3B, the thermal treatment device 510 may include a heat exchanger similar to the heat exchanger in the second configuration in FIGS. 2A and 2B. However, in contrast to the second configuration, in the third configuration, the heat exchange fluid utilized by the heat exchanger thermal treatment device 510 may include a fuel cell exhaust from the fuel cell stack 102. In particular, the heat exchange fluid may include a cathode exhaust (i.e., the ATO 130 exhaust) from the hot box 101. As illustrated in FIG. 3A, the cathode exhaust may be transferred from the cathode recuperator 120 in the hot box 101 by a transfer conduit 720a to the heat exchanger thermal treatment device 510. Thus, the transfer conduit 720a fluidly connects an outlet of the anode tail gas oxidizer 130 to the heat exchanger thermal treatment device 510. The heat from the cathode exhaust may be transferred to the fuel in the thermal treatment device 510. The heat exchanger thermal treatment device 510 may comprise any type of heat exchanger, such as a finned tube heat exchanger, a plate heat exchanger, a tube within a tube heat exchanger, a shell and tube heat exchanger, etc.

As illustrated in FIG. 3A, transfer conduit 720a may be fluidly connected to the cathode recuperator 120 to receive at least a portion of the cathode exhaust from the cathode recuperator 120. The cathode recuperator 120 receives the cathode exhaust (i.e., the ATO exhaust) from the ATO 130. The transfer conduit 720a may alternatively and/or additionally be connected at other locations inside the hot box 101 for accessing the cathode exhaust produced by the fuel cell stack 102. For example, the transfer conduit 720a may be coupled to the cathode exhaust outlet conduit 304D provided from the steam generator 160 (if present). Alternatively, the transfer conduit 720a may be coupled to the exhaust conduit 304A in order to access the cathode exhaust in the exhaust conduit 304A before it is used to oxidize the anode exhaust in the ATO 130.

A control valve 760 may be included in the transfer conduit 720a for controlling a flow rate of the cathode exhaust in the transfer conduit 720a. The control valve 760 may be controlled, for example, by a control signal from the controller 225. Similar to the second configuration in FIG. 2A, by controlling the control valve 760, the controller 225 may control the thermal treatment device 510 and thereby a temperature of the fuel. Further, the controller 225 may control the control valve 760 based on a signal from the fuel analyzer 570.

The cathode exhaust in the transfer conduit 720a may enter the heat exchanger thermal treatment device 510 and heat the fuel in the fuel line 505 passing through the heat exchanger thermal treatment device 510. The cathode exhaust may then exit the thermal treatment device 510 through exhaust conduit 720b. The exhaust conduit 720b may transfer the cathode exhaust out of the fuel processing unit 500.

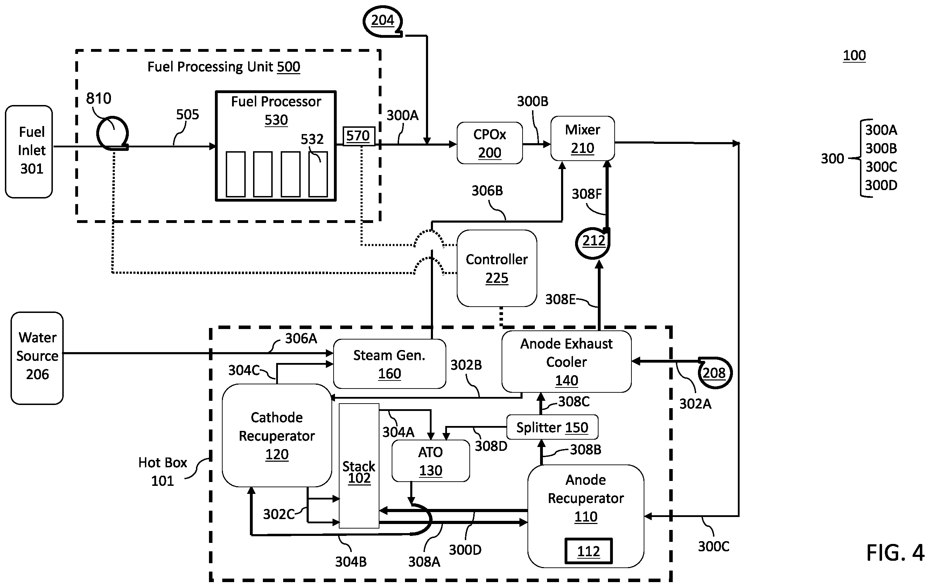

FIG. 4 is a schematic representation of the fuel cell system 100 having a fourth configuration, according to a fourth embodiment. The fourth configuration of the fuel cell system 100 may be substantially the same as the first configuration in FIG. 1A, except that a fuel pressurization device 810 is used as the thermal treatment device.

In the fourth configuration, the fuel pressurization device 810, such as a fuel blower, is provided on the fuel line 505 upstream of the fuel processor 530. The fuel pressurization device 810 increases the fuel temperature by increasing the fuel pressure. For example, natural gas at room temperature (e.g., 25 °C) and low pressure (e.g., 0.25 psi) may be heated to a higher temperature (e.g., 120 to 140 °C) by increasing the fuel pressure above 1 psi, such as from 8 to 10 psi by the fuel blower. Thus, in the fourth embodiment, the fuel pressurization device 810, such as the fuel blower, is located upstream of the fuel processor 530 to increase the fuel temperature to at least 50 °C by increasing a pressure of the fuel provided into the fuel processor. In this embodiment, the heater or heat exchanger thermal treatment device 510 may be present or omitted.

The fuel pressurization device 810 may be controlled, for example, by a control signal from the controller 225. Similar to the previous configurations, by controlling the speed of the blower, the controller 225 may control a pressure and thus the temperature of the fuel. Further, the controller 225 may control the speed of the blower based on a signal from the fuel analyzer 570.

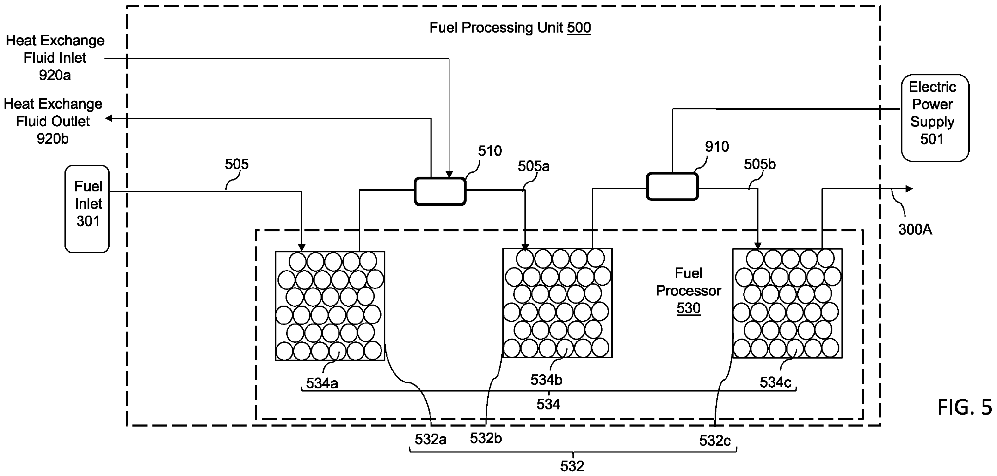

FIG. 5 is a detailed schematic view of the fuel processing unit 500 having a fifth configuration, according to the fifth embodiment. The fifth configuration may be substantially similar to the first, second and third configurations shown in FIGS. 1B, 2B and 3B, except that the fuel processor 530 may include a plurality of desulfurization canisters 532 and the fuel processing unit 500 may include cooling device 910 in addition to the thermal treatment device 510.

As illustrated in FIG. 5, in the fifth configuration, the fuel processor 530 may include a first desulfurization canister 532a, a second desulfurization canister 532b and a third desulfurization canister 532c, referred to collectively as the desulfurization canisters 532. The desulfurization canisters 532 may be fluidly connected in series and include a plurality of respective different desulfurization materials 534 (e.g., 534a, 534b, 534c, etc.) configured to process the fuel at a plurality of different temperatures, respectively.

The first desulfurization canister 532a may include a first desulfurization material 534a configured to process the fuel at a first predetermined temperature. The second desulfurization canister 532b may include a second desulfurization material 534b configured to process the fuel at a second predetermined temperature. The third desulfurization canister 532c may include a third desulfurization material 534c configured to process the fuel at a third predetermined temperature. The first predetermined temperature, the second predetermined temperature and the third predetermined temperature may be different temperatures.

For example, the second predetermined temperature may comprise the above described elevated temperature, which is higher than the first predetermined temperature, while the third predetermined temperature may be lower than the second predetermined temperature and higher than the first predetermined temperature. The overall range of predetermined temperatures for the desulfurization materials 534 in the desulfurization canisters 532 in the fuel processor 530 may be in a range from 25°C to 120°C. Thus, for example, the desulfurization material 534a in the desulfurization canister 532a may operate most efficiently at around room temperature (e.g., 25°C), the desulfurization material 534c in the desulfurization canister 532c may operate most efficiently at 40°C, and the desulfurization material 534b in the desulfurization canister 532b may operate most efficiently at the elevated temperature between 60°C and 120°C, and so on.

The fuel processing unit 500 may also include the thermal treatment device 510 and the cooling device 910. The thermal treatment device 510 may be configured to heat the fuel to the elevated second predetermined temperature, and the cooling device 910 may be configured to actively cool the fuel to the third predetermined temperature. As used herein, actively cool means providing cooling air or another cooling medium to cool the fuel (e.g., by convection and/or conduction) in addition to passively cooling the fuel as it passes through various desulfurizer canisters 532 and the fuel line 505 which are maintained at a lower temperature than the fuel.

The thermal treatment device 510 may comprise the heater of the first embodiment or the heat exchanger of the second or third embodiments. The cooling device 910 may comprise any suitable cooling device, such as a cooling fan or a heat exchanger.

The first desulfurization canister 532a may be located upstream of the second desulfurization canister 532b and the third desulfurization canister 532c. The first desulfurization canister 532a may include an ambient desulfurization material 534a configured to process the fuel most efficiently at an ambient temperature (e.g., about 20°C to 35°C). Therefore, the fuel may be transferred in the fuel line 505 to the desulfurization canister 532a at ambient temperature without being thermally treated by a thermal treatment device.

The processed fuel may be transferred from the first desulfurization canister 532a to the second desulfurization canister 532b via a first connecting portion 505a of the fuel line 505. The second desulfurization canister 532b may include an elevated temperature desulfurization material configured to process the fuel most efficiently at the elevated temperature above 50°C. In at least one embodiment, the desulfurization material may be configured to process the fuel most efficiently at a temperature in a range from 60°C to 120°C.

The fuel processor 530 includes the thermal treatment device 510 on the first connecting portion 505a of the fuel line 505 located between the first desulfurization canister 532a and the second desulfurization canister 532b. The thermal treatment device 510 may thermally treat the fuel before the fuel enters the second desulfurization canister 532b so that the fuel enters the second desulfurization canister 532b at the elevated second predetermined temperature.

In one embodiment, the thermal treatment device 510 is a heat exchanger that heats the fuel in the first connecting portion 505a of the fuel line 505 with a hot (e.g., greater than ambient temperature) heat exchange fluid. The heat exchange fluid may include, for example, hot water, steam, exhaust from the fuel cell stack 102, etc., as described above with respect to FIGS. 2B and 3B. The heat exchanger may be coupled to a heat exchange fluid inlet 920a which transfers the heat exchange fluid to the heat exchanger, and coupled to a heat exchange fluid outlet 920b which transfers the heat exchange fluid away from the heat exchanger. The heat exchange fluid inlet 920a may comprise one of the conduits 620a or 720a described above with respect to FIGS. 2A and 3A, respectively. The heat exchange fluid outlet 920b may comprise one of the conduits 620b or 720b described above with respect to FIGS. 2A and 3A, respectively. Alternatively, the thermal treatment device 510 may comprise an electric heater that generates heat by joule heating, as illustrated in FIGs. 1A and 1B (in which case the heat exchange fluid inlets and fluid outlets in FIG. 5 can be eliminated).

The fuel may be transferred by the second connecting portion 505b of the fuel line 505 from the second desulfurization canister 532b to the third desulfurization canister 532c. The third desulfurization canister 532c may include an intermediate temperature desulfurization material 534c configured to process the fuel most efficiently at an intermediate temperature in a range from 35°C to 45°C.

The fuel processor 530 includes the cooling device 910 on the second connecting portion 505b of the fuel line 505 which fluidly connects the second desulfurization canister 532b to the third desulfurization canister 532c. The cooling device 910 may actively cool the fuel before the fuel enters the third desulfurization canister 532c so that the fuel enters the third desulfurization canister 532c at the third predetermined temperature (e.g., a temperature in a range from 35°C to 45°C). In one embodiment, the cooling device 910 is an electric fan powered by the power supply 501. The electric power supply 501 may include a power supply which provides electric power generated outside the fuel cell system 100 (e.g., power supplied by the electric grid, battery, or other renewable energy source) and/or power generated by the fuel cell system 100.

The fan cools the fuel in the second connecting portion 505b of the fuel line 505 by blowing ambient air over the second connecting portion 505b of the fuel line 505. Alternatively or additionally, the cooling device 910 may be a heat exchanger that uses a cool heat exchange fluid (e.g., cold water) to cool the fuel in the second connecting portion 505b of the fuel line 505. For example, the heat exchanger may be connected to the water conduit 306A in a cooling loop which provides cold water from the water conduit 306A to the heat exchanger.

In various embodiments, the same desulfurization material 534 may be operated at different elevated temperatures at the beginning and middle of its lifetime. For example, the elevated temperature comprises a first predetermined temperature (e.g., 55°C to 70 °C) during at least a first six months (or during 1 to 2 years) from a beginning of lifetime of the desulfurization material 534. Then, the elevated temperature comprises a second predetermined temperature (e.g., 110°C to 125°C) higher than the first predetermined temperature after the at least a first six months (or after 1 to 2 years) from the beginning of lifetime of the desulfurization material.

While particular configurations have been discussed in connection with the disclosure of FIG. 5, it should be understood that heat exchange embodiments from FIGs. 1-4 can be utilized to heat the desulfurization canisters 532 in different orders and in different combinations. For example, desulfurization canister 532a can be configured to operate at ambient temperature as illustrated in FIG. 5, and desulfurization canister 532b can be configured to operate at an elevated temperature compared to desulfurization canister 532a through the use of an electric heater as illustrated and described in connection with FIG. 1B. Finally, desulfurization canister 532c can be configured to operate at a temperature greater than desulfurization canister 532b through the use of a cathode exhaust supplied to a heat exchanger thermal treatment device 510 as illustrated in FIG. 3A.

The foregoing method descriptions are provided merely as illustrative examples and are not intended to require or imply that the steps of the various embodiments must be performed in the order presented. As will be appreciated by one of skill in the art, the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular. Further, any step or component of any embodiment described herein can be used in any other embodiment.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

The invention also refers to the following embodiments, wherein the term "claim" means "embodiment":
1. A fuel processing unit, comprising:
   a fuel line configured to transfer a fuel;
   a fuel processor containing a processing material container configured to contain a processing material, the fuel processor configured to remove at least one impurity from the fuel at an elevated temperature above 50°C to produce a processed fuel; and
   a thermal treatment device configured to thermally treat the fuel by treating at least one of the fuel line to at least the elevated temperature or the processing material container to at least the elevated temperature.
2. The fuel processing unit of claim 1, wherein the thermal treatment device comprises a heater.
3. The fuel processing unit of claim 2, wherein the heater is located on or adjacent to the fuel line and is configured to thermally treat the fuel by heating the fuel line.
4. The fuel processing unit of claim 2, wherein the heater is located on or adjacent to the processing material container and is configured to thermally treat the processing material by heating the processing material container.
5. The fuel processing unit of claim 1, wherein the thermal treatment device comprises a heat exchanger.
6. The fuel processing unit of claim 5, wherein the heat exchanger is located on the fuel line.
7. The fuel processing unit of claim 1, wherein the thermal treatment device comprises a fuel pressurization device located on the fuel line.
8. The fuel processing unit of claim 1, wherein:
   the processing material container comprises a first desulfurization canister;
   the processing material comprises a first desulfurization material configured to remove sulfur from the fuel at the elevated temperature; and
   the elevated temperature is 60°C to 120°C.
9. The fuel processing unit of claim 8, wherein the fuel processor further comprises:
   a second desulfurization canister located on the fuel line upstream of the first desulfurization canister, the second desulfurization including a second desulfurization material configured to remove the sulfur from the fuel at a second temperature below the elevated temperature;
   a third desulfurization canister located on the fuel line downstream of the first desulfurization canister, the third desulfurization including a third desulfurization material configured to remove the sulfur from the fuel at a third temperature below the elevated temperature; and
   a cooling device located on a second connecting portion of the fuel line which connects the first desulfurization canister and the third desulfurization canister, wherein the thermal treatment device is located on a first connecting portion of the fuel line which connects the first desulfurization canister and the second desulfurization canister.
10. A fuel cell system, comprising:
   the fuel processing unit of claim 1;
   a fuel cell stack; and
   at least one fuel conduit connecting an outlet of the fuel processing unit to a fuel inlet of the fuel cell stack.
11. The fuel cell system of claim 10, further comprising:
   a steam generator; and
   a transfer conduit connecting an outlet of the steam generator to the thermal treatment device, wherein the thermal treatment device comprises a heat exchanger located on the fuel line.
12. The fuel cell system of claim 10, further comprising:
   an anode tail gas oxidizer configured to oxidize a fuel exhaust from the fuel cell stack using an air exhaust from the fuel cell stack; and
   a transfer conduit fluidly connecting an outlet of the anode tail gas oxidizer to the thermal treatment device, wherein the thermal treatment device comprises a heat exchanger located on the fuel line.
13. A method of operating a fuel cell system, comprising:
   processing a fuel to remove at least one impurity from the fuel at an elevated temperature above 50°C to provide a processed fuel; and
   providing the processed fuel to a fuel cell stack.
14. The method of claim 13, wherein the processing the fuel to remove at least one impurity from the fuel comprises desulfurizing the fuel to remove at least one of sulfur or a sulfur compound from the fuel using a desulfurization material.
15. The method of claim 14, wherein the processing the fuel to remove at least one impurity from the fuel at the elevated temperature comprises heating the fuel to at least the elevated temperature prior to providing the fuel to the desulfurization material.
16. The method of claim 15, wherein the heating the fuel comprises using a heater to heat the fuel.
17. The method of claim 15, wherein the heating the fuel comprises heating the fuel in a heat exchanger using at least one of steam or a cathode exhaust stream from the fuel cell stack.
18. The method of claim 15, wherein the heating the fuel comprises increasing a pressure of the fuel to increase a temperature of the fuel to the elevated temperature above 50°C.
19. The method of claim 15, further comprising:
   actively cooling the processed fuel; and
   providing the cooled processed fuel to a second desulfurizer material prior to the providing the processed fuel to the fuel cell stack.
20. The method of claim 14, wherein:
   the elevated temperature comprises a first predetermined temperature during at least a first six months from a beginning of lifetime of the desulfurization material; and
   the elevated temperature comprises a second predetermined temperature higher than the first predetermined temperature after the at least a first six months from the beginning of lifetime of the desulfurization material.

## Claims

1. A fuel processing unit, comprising:
a fuel line configured to transfer a fuel;
a fuel processor containing a processing material container configured to contain a processing material, the fuel processor configured to remove at least one impurity from the fuel at an elevated temperature above 50°C to produce a processed fuel; and
a thermal treatment device configured to thermally treat the fuel by treating at least one of the fuel line to at least the elevated temperature or the processing material container to at least the elevated temperature.

2. The fuel processing unit of claim 1, wherein the thermal treatment device comprises a heater.

3. The fuel processing unit of claim 2, wherein the heater is located either:
on or adjacent to the fuel line and is configured to thermally treat the fuel by heating the fuel line; or
on or adjacent to the processing material container and is configured to thermally treat the processing material by heating the processing material container.

4. The fuel processing unit of claim 1, wherein the thermal treatment device comprises a heat exchanger located on the fuel line.

5. The fuel processing unit of claim 1, wherein the thermal treatment device comprises a fuel pressurization device located on the fuel line.

6. The fuel processing unit of claim 1, wherein:
the processing material container comprises a first desulfurization canister;
the processing material comprises a first desulfurization material configured to remove sulfur from the fuel at the elevated temperature;
the elevated temperature is 60°C to 120°C;
the fuel processor further comprises:
a second desulfurization canister located on the fuel line upstream of the first desulfurization canister, the second desulfurization including a second desulfurization material configured to remove the sulfur from the fuel at a second temperature below the elevated temperature;
a third desulfurization canister located on the fuel line downstream of the first desulfurization canister, the third desulfurization including a third desulfurization material configured to remove the sulfur from the fuel at a third temperature below the elevated temperature; and
a cooling device located on a second connecting portion of the fuel line which connects the first desulfurization canister and the third desulfurization canister, wherein the thermal treatment device is located on a first connecting portion of the fuel line which connects the first desulfurization canister and the second desulfurization canister.

7. A fuel cell system, comprising:
the fuel processing unit of claim 1;
a fuel cell stack; and
at least one fuel conduit connecting an outlet of the fuel processing unit to a fuel inlet of the fuel cell stack.

8. The fuel cell system of claim 7, further comprising:
at least one of a steam generator or an anode tail gas oxidizer configured to oxidize a fuel exhaust from the fuel cell stack using an air exhaust from the fuel cell stack; and
a transfer conduit connecting an outlet of the steam generator or the anode tail gas oxidizer to the thermal treatment device, wherein the thermal treatment device comprises a heat exchanger located on the fuel line.

9. A method of operating a fuel cell system, comprising:
processing a fuel to remove at least one impurity from the fuel at an elevated temperature above 50°C to provide a processed fuel; and
providing the processed fuel to a fuel cell stack.

10. The method of claim 9, wherein the processing the fuel to remove at least one impurity from the fuel comprises desulfurizing the fuel to remove at least one of sulfur or a sulfur compound from the fuel using a desulfurization material.

11. The method of claim 10, wherein the processing the fuel to remove at least one impurity from the fuel at the elevated temperature comprises heating the fuel to at least the elevated temperature prior to providing the fuel to the desulfurization material.

12. The method of claim 11, wherein the heating the fuel comprises using a heater to heat the fuel.

13. The method of claim 11, wherein the heating the fuel comprises heating the fuel in a heat exchanger using at least one of steam or a cathode exhaust stream from the fuel cell stack.

14. The method of claim 11, wherein the heating the fuel comprises increasing a pressure of the fuel to increase a temperature of the fuel to the elevated temperature above 50°C.

15. The method of claim 11, further comprising:
actively cooling the processed fuel; and
providing the cooled processed fuel to a second desulfurizer material prior to the providing the processed fuel to the fuel cell stack;
wherein:
the elevated temperature comprises a first predetermined temperature during at least a first six months from a beginning of lifetime of the desulfurization material; and
the elevated temperature comprises a second predetermined temperature higher than the first predetermined temperature after the at least a first six months from the beginning of lifetime of the desulfurization material.
